# EUROPEAN PATENT APPLICATION

(11) **EP 3 512 073 A1**
(43) Date of publication of application: **17.07.2019**
(21) Application number: 18212525.2
(22) Date of filing: 14.12.2018
(51) Int. Cl.: H02J 50/80, H02J 50/60, B60L 53/124

(54) **WIRELESS ELECTRICAL CHARGING SYSTEM WITH OBJECT DETECTION CIRCUITRY AND METHOD OF OPERATING SAME**

(30) Priority: 11.01.2018 US 201815868064
(71) Applicant: Aptiv Technologies Limited, St. Michael (BB)
(72) Inventor: BROWN, Nicholas, J, North Huntingdon, Pennsylvania 15642 (US); THOMPSON, Gary, R, Warren, Ohio 44484 (US); BOLLINGER, Patrick, J, Warren, Ohio 44481 (US)
(74) Representative: Westphal, Mussgnug & Partner Patentanwälte mbB

(57) **Abstract**

An electrical charging includes an alternating current power supply (16), a source coil (18) configured to generate an alternating magnetic field (20), a capture coil (22) magnetically coupled to the source coil (18), thereby inducing the capture coil (22) to capture electrical power from the alternating magnetic field (20), a plurality of magnetic sensors (50) disposed at distinct locations relative to the source coil (18), each magnetic sensor (50) configured to determine a sensor strength value of the alternating magnetic field (20), object detection circuitry (48) configured to detect an object (52) at an object location relative to the source coil (18), and controller circuitry (30) controller circuitry (30) configured to determine an object strength value of the alternating magnetic field (20) at the object location based on sensor strength value from the magnetic sensors (50) and to interrupt electrical power from the power supply (16) when the object detection circuitry (48) detects the object (52) at the object location when the object strength value exceeds a threshold value.

## Description

### TECHNICAL FIELD OF THE INVENTION

The invention relates to a wireless battery charger, particularly to a wireless battery charger with object detection circuitry.

### BRIEF DESCRIPTION OF THE SEVERAL VIEWS OF THE DRAWING

The present invention will now be described, by way of example with reference to the accompanying drawings, in which:
Fig. 1 is a schematic diagram of an electrical charging system according to one embodiment;
Fig. 2 is pictorial side view of the electrical charging system of Fig. 1 according to one embodiment; and
Fig. 3 is a flowchart for a method of controlling an electrical charging system according to another embodiment.

### DETAILED DESCRIPTION OF THE INVENTION

The electrical charging system presented herein is configured to wirelessly charge an energy storage device, such as a battery in a vehicle or portable electronic device. Electrical power is wirelessly transferred from a power supply to the energy storage device by a source coil connected to the power supply that generates a magnetic field received by a capture coil connected to the energy storage device. The optimum operating frequency of the power supply may vary due to differences in the position of the capture coil relative to the source coil or from differences in electrical characteristics between different capture coils.

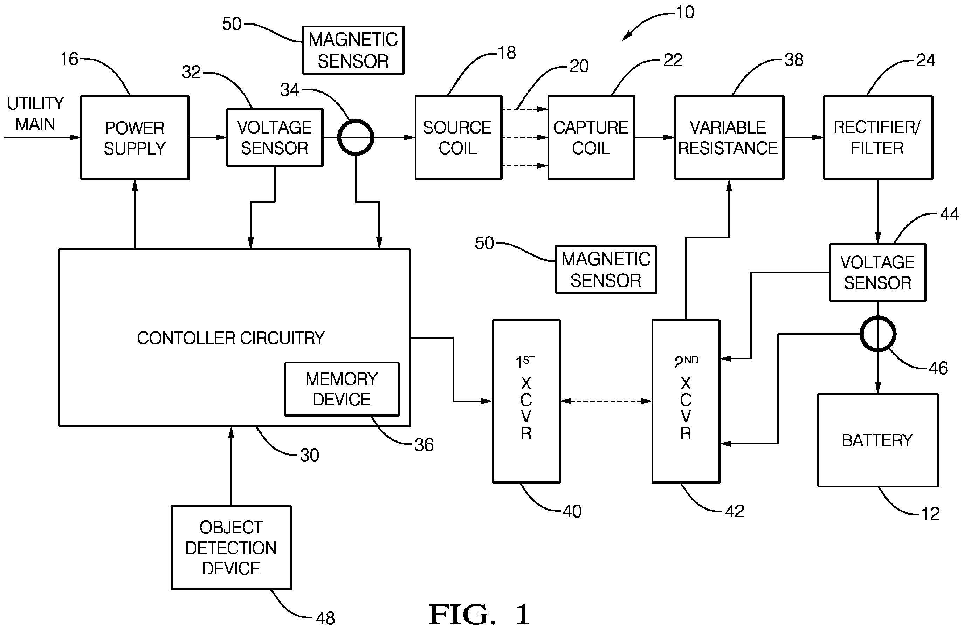

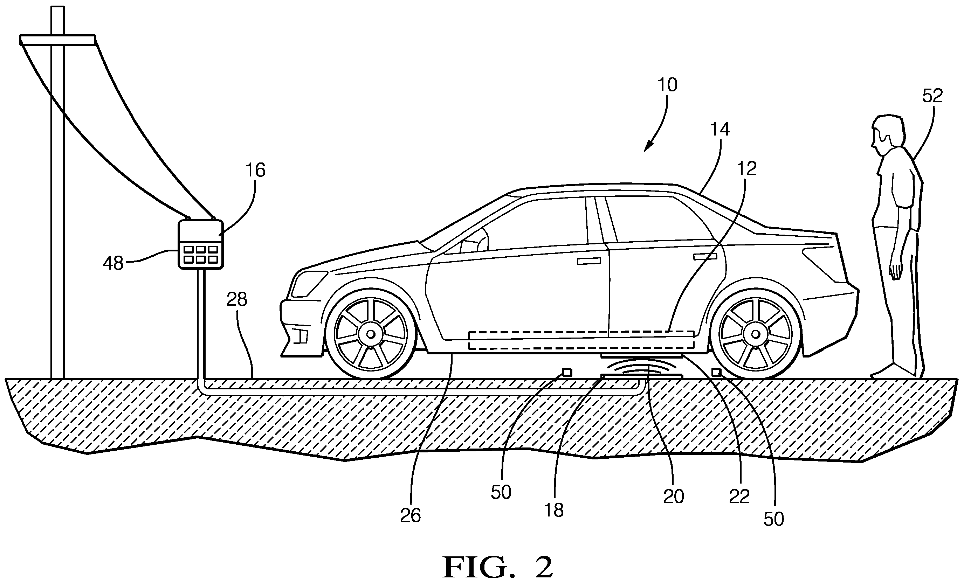

Figs. 1 and 2 illustrate an example of an electrical charging system 10, according to an embodiment of the invention, hereinafter referred to as the system 10. In this example, the system 10 is configured to wirelessly charge an energy storage device, such as a battery 12 in an electric or hybrid electric vehicle 14 as shown in Fig. 1.

According to this example, a charging station portion of the system 10 is located external to the vehicle 14 includes an electrical power supply 16 that is connected to an electrical power source, in this example a utility main providing electrical power to the power supply 16 at 240 VAC at 50-60 Hz. The power supply 16 includes an inverter (not shown) that produces an alternating current (AC) voltage within a frequency range of 81 to 90 kilohertz (Khz). The output frequency of the power supply 16 can be adjusted based on an input signal from an external device. In a high power output mode, the power supply 16 supplies electrical power in a range of more than 1 kilowatt (kW). The power output mode of the power supply 16 is selected based on an input signal from an external device, such as controller circuitry.

The power supply 16 is electrically coupled to the power source. As used herein and throughout, electrically coupled means that named devices are connected by a wire conductor. The alternating electrical power supplied to a source coil 18 by the power supply 16 causes the source coil 18 to generate a magnetic field 20. A capture coil 22 is placed within this magnetic field 20 and the magnetic field 20 induces an alternating electrical current in the capture coil 22, thus converting the magnetic energy in the magnetic field 20 to electrical energy.

The frequency of the electrical power output from the power supply 16 may be variable and may be controlled to improve magnetic coupling between the source coil 18 and the capture coil 22 because the coupling characteristics and resonant frequency between the source coil 18 and capture coil 22 can change each time the system 10 is used due to variations in location of the capture coil 22 relative to the source coil 18 and/or a different capture coil having different characteristics attached to a different vehicle being used.

In order to supply the electrical power captured by the capture coil 22 to the battery 12, the system 10 includes a rectifier/filter 24 to convert the alternating current from the capture coil 22 to a non-time variant current and voltage, hereinafter referred to as a direct current and a direct voltage, that can be used to charge the battery 12. As illustrated in Fig. 2, the capture coil 22 is located on the underside 26 of the vehicle 14 and the source coil 18 is located on a surface 28, such as a parking lot or garage floor, under and apart from the vehicle 14.

The power supply 16 may be configured to operate in two different power output modes. In a low power output mode, the power supply 16 supplies electrical power in a range of less than 1 watt (W). This provides the benefit of minimizing power consumption until optimum operating parameters are established for the system 10. It also provides the benefit on minimizing the magnetic field 20 around the perimeter of the vehicle 14, allowing additional time for object detection circuitry 48 which is also component of the system 10 to determine whether an animate or an inanimate object would be exposed to an unacceptably high magnetic field 20 during the high power output mode. As used herein, an animate object is an animal rather than a plant, fungus, or bacteria.

The system 10 further includes a plurality of magnetic sensors 50 that are disposed at distinct locations around the source coil 18. Each magnetic sensor 50 of the plurality of magnetic sensors 50 is configured to determine a value of the alternating magnetic field 20 at its own distinct location, hereinafter referred to as the sensor strength value. The magnetitic sensors are preferably Hall Effect magnetic sensors, although other types of magnetic sensors, such as flux gates, magnetoresistive sensors, or magnetometers. Each magnetic sensor 50 is communicatively coupled to the controller circuitry 30 in order to transmit its sensor strength value to the controller circuitry 30. The plurality of magnetic sensors 50 comprises an array of magnetic sensors 50, preferably between four and twelve magnetic sensors 50, located around the source coil 18.

The system 10 additionally includes object detection circuitry 48 that is configured to detect an object 52 and determine a location of the object 52 relative to the source coil 18. The object detection circuitry 48 may use RADAR (radio detection and ranging), LiDAR ([laser] light detection and ranging), ultrasonic detection, or any other object detection technology capable of determining the location of the object 52 relative to the source coil 18, hereinafter referred to as the object location. As discussed above, the object detection circuitry 48 preferably is capable of discrimination between animate and inanimate objects. The object detection circuitry 48 is communicatively coupled to the controller circuitry 30 in order to transmit the object location to the controller circuitry 30.

The controller circuitry 30 is further configured to determine a value of the strength of the alternating magnetic field 20 at the object location, hereinafter referred to as the object strength value, based on the sensor strength values received from the plurality of magnetic sensors 50. The controller circuitry 30 is further configured send a command to the power supply 16 to interrupt the electrical power sourced to the source coil 18 when the object detection circuitry 48 detects the object 52 at the object location and the object strength value exceeds a threshold value, thereby terminating the alternating magnetic field 20. The threshold value may differ depending upon whether the an animate or inanimate object is detected. If an animate object is detected, the threshold is determined by safety standards such as exposure guidelines set by the International Commission on Non-Ionizing Radiation Protection (ICNIRP) and referenced by the Society of Automotive Engineers (SAE) Recommended Practice J2954 for wireless charging. If an inanimate object is detected, the threshold may be higher at a level that would not cause a metallic object at the object location to overheat.

The system 10 may also include a capture current sensor 44 that is electrically coupled to the capture coil 22 and is configured to determine a capture current value of the electrical power captured by the capture coil 22, a capture voltage sensor 46 electrically coupled to the capture coil 22 configured to determine a capture voltage value of the electrical power captured by the capture coil 22, a first transceiver communicatively coupled with the capture current sensor 44 and the capture voltage sensor 46, and a second transceiver communicatively coupled with the controller circuitry 30 and in wireless communication with the first transceiver in order to wirelessly transmit the capture current value and the capture voltage value to the controller circuitry 30. The system 10 may additionally include a source current sensor 34 that is electrically coupled to the power supply 16 and communicatively coupled with the controller circuitry 30 and configured to determine a source current value of the electrical power sourced by the power supply 16 and a source voltage sensor 32 electrically coupled to the power supply 16 and communicatively coupled with the controller circuitry 30 and configured to determine a source voltage value of the electrical power sourced by the power supply 16, preferably the root-means-squared (rms) values of the voltage value and the current value. In alternative embodiments, the source voltage sensor 32 and the source current sensor 34 may be in wireless communication with the controller circuitry 30, for example using a BLUETOOTH or WIFI wireless communication protocol.

The controller circuitry 30 is configured to determine a coupling factor based on the capture current value, the capture voltage value, the source current value, and the source voltage value and is further configured to determine the object strength value of the alternating magnetic field 20 at the object location based on the sensor strength values of the plurality of magnetic sensors 50 and in addition on the coupling factor.

The system 10 may additionally include a variable resistor 38 that is electrically coupled to the capture coil 22 and configured to provide a variable resistive load to the capture coil 22. The variable resistor 38 is switchably electrically coupled to the capture coil 22 and the rectifier/filter 24 such that the captured electrical power from the capture coil 22 flows either to the rectifier/filter 24 or to the variable resistor 38. In alternative embodiments of the system 10, the variable resistor 38 may be switchably electrically coupled the rectifier/filter 24 and the battery 12. The variable resistor 38 is also wirelessly connected to the controller circuitry 30 by a first wireless transceiver 40 that that is electrically coupled to the controller circuitry 30 and a second wireless transceiver 42 that is electrically coupled to the variable resistor 38 and wirelessly connected to the first wireless transceiver 40, for example using a BLUETOOTH or WIFI wireless communication protocol The controller circuitry 30 is further configured to command the variable resistor 38 to change its resistance value sending a command through the first and second transceivers 40, 42. As shown in Fig, 3 the variable resistor 38 is a switched network of resistors having different values and the resistance is varied by opening and closing the various switches according to the commands. The switches are preferably electrically controlled relay switches. The variable resistor 38 is changeable at least between two resistance values, a first resistance value and a second resistance value greater than the first resistance value. The variable resistor 38 also includes control circuitry (not shown) needed to change the resistance value based on commands from the controller circuitry 30. Such control circuitry is well known to those skilled in the art. The controller circuitry 30 is configured to determine an impedance value (z) and a voltage-current phase value (Θ) of the electrical power output of the power supply 16 based on the current value and the voltage value. The impedance is calculated by the formula z = v/i. The voltage-current phase value (Θ) is determined by measuring a time difference between the zero crossing of the voltage value (v) and the current value (i).

In operation, the first and second transceivers 40, 42 establish wireless WIFI communication to initiate the charging process. The controller circuitry 30 then commands the power supply 16 to enter the low power output mode. This enables the system 10 to verify that the capture coil 22 is in a position relative to the source coil 18 and that is capable of receiving the alternating magnetic field 20 from the source coil 18. While the power supply 16 is in this low power output mode, the controller circuitry 30 commands the variable resistor 38 to decouple the rectifier/filter 24 from the capture coil 22 and establish a first resistance value. While the variable resistor 38 has the first resistance value, the controller circuitry 30 commands the power supply 16 to vary the frequency of the output power within the operating frequency range of the power supply 16. The controller circuitry 30 receives the current values (i) and voltage values (v) and calculates the impedance value (z) and the voltage-current phase value (Θ) of the electrical power output. The controller circuitry 30 then determines the object strength value of the alternating magnetic field 20 at the object location based on the sensor strength values of the plurality of magnetic sensors 50 and in addition on the impedance value, and the voltage-current phase value.

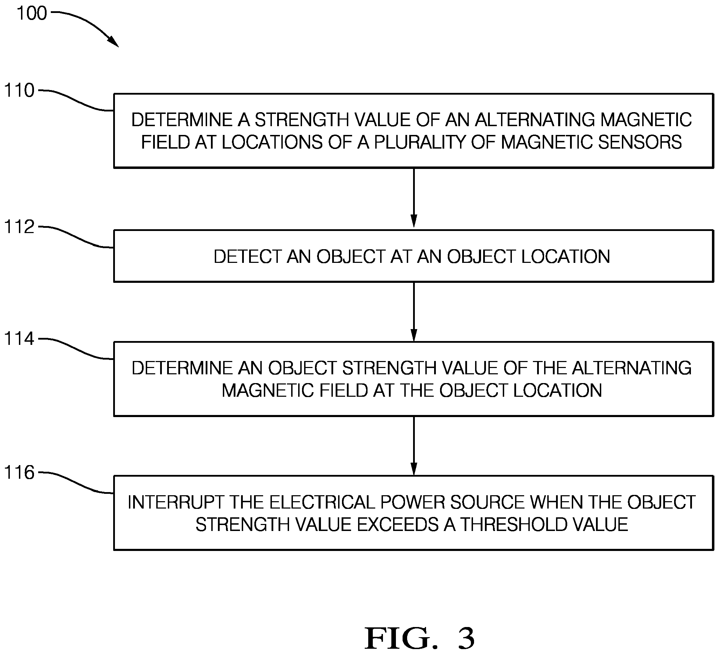

Fig. 3 illustrates an example of a method 100 of operating an electrical charging system 10 to wirelessly charge an energy storage device. The electrical charging system 10 includes a power supply 16 configured to source electrical power having an alternating current, a source coil 18 electrically coupled with the power supply 16 and configured to generate an alternating magnetic field 20, a capture coil 22 magnetically coupled to said source coil 18, thereby inducing the capture coil 22 to capture electrical power from the alternating magnetic field 20, a plurality of magnetic sensors 50 disposed at distinct locations relative to the source coil 18, object detection circuitry 48, and controller circuitry 30 is communicatively coupled with the power supply 16, the object detection circuitry 48, and plurality of magnetic sensors 50. The method 100 includes the following steps.

STEP 110, DETERMINE A STRENGTH VALUE OF AN ALTERNATING MAGNETIC FIELD AT LOCATIONS OF A PLURALITY OF MAGNETIC SENSORS, includes determining a sensor strength value of the alternating magnetic field 20 at the distinct location of each magnetic sensor 50 of the plurality of magnetic sensors 50.

STEP 112, DETECT AN OBJECT AT AN OBJECT LOCATION, includes detecting an object 52 at an object location relative to the source coil 18 using the object detection circuitry 48. Step 112 may also include determining whether the object 52 is an animate object or an inanimate object using the object detection circuitry 48.

STEP 114, DETERMINE AN OBJECT STRENGTH VALUE OF THE ALTERNATING MAGNETIC FIELD AT THE OBJECT LOCATION, includes determining an object strength value of the alternating magnetic field 20 at the object location based on the sensor strength value of the alternating magnetic field 20 at the distinct location of each magnetic sensor 50 of the plurality of magnetic sensors using the controller circuitry 30 and determining whether the object strength value exceeds a threshold value using the controller circuitry 30.

The electrical charging system 10 may further include a capture current sensor 44 electrically coupled to the capture coil 22, a capture voltage sensor 46 electrically coupled to the capture coil 22, a first transceiver communicatively coupled with the capture current sensor 44 and the capture voltage sensor 46, a second transceiver communicatively coupled with the controller circuitry 30 and in wireless communication with the first transceiver, a source current sensor 34 electrically coupled to the power supply 16 and communicatively coupled with the controller circuitry 30, and a source voltage sensor 32 electrically coupled to the power supply 16 and communicatively coupled with the controller circuitry 30. In this case, STEP 114 may further include the sub-steps of determining a capture current value of the electrical power captured by the capture coil 22 using the capture current sensor 44, determining a capture voltage value of the electrical power captured by the capture coil 22 using the capture voltage sensor 46, determining a source current value of the electrical power sourced by the power supply 16 using the source current sensor 34, determining a source voltage value of the electrical power sourced by the power supply 16 using the source voltage sensor 32, determining a coupling factor using the controller circuitry 30 based on the capture current value, the capture voltage value, the source current value, and the source voltage value, and determining the object strength value of the alternating magnetic field 20 at the object location using the controller circuitry 30 based on the sensor strength value of the alternating magnetic field 20 at the distinct location of each magnetic sensor 50 of the plurality of magnetic sensors and the coupling factor.

Alternatively, the electrical charging system 10 may further include a variable resistor 38 that is switchably coupled to the capture coil 22 and configured to provide a variable resistive load to the capture coil 22, a first transceiver communicatively coupled with the variable resistor 38, a second transceiver communicatively coupled with the controller circuitry 30 and in wireless communication with the first transceiver, a current sensor electrically coupled to the power supply 16 and communicatively coupled with the controller circuitry 30, and a voltage sensor electrically coupled to the power supply 16 and communicatively coupled with the controller circuitry 30. The power supply 16 is configured to vary a frequency of the alternating current. The controller circuitry 30 is communicatively coupled with the power supply 16. In this case, STEP 114 further includes the sub-steps of determining a current value of the electrical power sourced by the power supply 16 using the current sensor, determining a voltage value of the electrical power sourced by the power supply 16 using the voltage sensor, varying the frequency of the electrical power using a command from the controller circuitry 30 to the power supply 16, varying a resistance of the variable resistor 38 using a command from the controller circuitry 30 to the variable resistor 38 via the first and second transceivers 40, 42, determining an impedance value and a voltage-current phase value based on the current value and the voltage value using the controller circuitry 30, determining the object strength value of the alternating magnetic field 20 at the object location based on the sensor strength value of the alternating magnetic field 20 at the distinct location of each magnetic sensor 50 of the plurality of magnetic sensors 50, the impedance value, and the voltage-current phase value using the controller circuitry 30.

The power supply 16 may be configured to supply the electrical power at a first power value or at a second power value that is higher than the first power value and wherein the controller circuitry 30 is configured to command the power supply 16 to supply the electrical power at the first power value or at the second power value.

The sub-step of varying the frequency of the electrical power using a command from the controller circuitry 30 to the power supply 16 may be performed concurrently with the sub-step of varying a resistance of the variable resistor 38 using a command from the controller circuitry 30 to the variable resistor 38 via the first and second transceivers 40, 42 when the power supply 16 is supplying the electrical power at the first power value.

The variable resistor 38 may be changeable between a first resistance value and a second resistance value greater than the first resistance value.

STEP 116, INTERRUPT THE ELECTRICAL POWER SOURCED WHEN THE OBJECT STRENGTH VALUE EXCEEDS A THRESHOLD VALUE, includes interrupting the electrical power sourced by the power supply 16 when the controller circuitry 30 determines that the object strength value exceeds a threshold value. STEP 116 may be performed only in instances when the object detection circuitry 48 determines that an animate object is at the object location and the controller circuitry 30 determines that the object strength value exceeds the threshold value.

Accordingly, an electrical charging system 10 and a method 100 of operating such a system 10 is provided. The plurality of magnetic sensors 50 allow the system 10 to determine the strength of the alternating magnetic field 20 at the object location detected by the object detection circuitry 48, allowing the controller circuitry 30 to interrupt power to the source coil 18 only when the strength of the magnetic field 20 at the object location exceed a threshold, e.g. ICNIRP guidelines when the object 52 is an animate object or levels that would cause an inanimate object, such as a metallic tool, to overheat. This helps to prevent need to interrupt charging when an object 52 is detected but the field strength does not pose a concern at that particular location, thereby preventing unnecessary interruption of charging and improving charging time. The coupling factor between the source and capture coils and/or the impedance and voltage-current phase of the load electrically coupled to the capture coil 22 may also be used to refine the determination of the strength of the magnetic field 20 at the object location.

While this invention has been described in terms of the preferred embodiments thereof, it is not intended to be so limited, but rather only to the extent set forth in the claims that follow. For example, the above-described embodiments (and/or aspects thereof) may be used in combination with each other. In addition, many modifications may be made to configure a particular situation or material to the teachings of the invention without departing from its scope. Dimensions, types of materials, orientations of the various components, and the number and positions of the various components described herein are intended to define parameters of certain embodiments, and are by no means limiting and are merely prototypical embodiments.

Many other embodiments and modifications within the spirit and scope of the claims will be apparent to those of skill in the art upon reviewing the above description. The scope of the invention should, therefore, be determined with reference to the following claims, along with the full scope of equivalents to which such claims are entitled.

In the following claims, the terms "including" and "in which" are used as the plain-English equivalents of the respective terms "comprising" and "wherein." Moreover, the use of the terms first, second, etc. does not denote any order of importance, but rather the terms first, second, etc. are used to distinguish one element from another. Furthermore, the use of the terms a, an, etc. do not denote a limitation of quantity, but rather denote the presence of at least one of the referenced items. Additionally, directional terms such as upper, lower, etc. do not denote any particular orientation, but rather the terms upper, lower, etc. are used to distinguish one element from another and locational establish a relationship between the various elements.

## Claims

1. An electrical charging system (10) configured to wirelessly charge an energy storage device (12), comprising:
a power supply (16) configured to source electrical power having an alternating current;
a source coil (18) electrically coupled with the power supply (16) and configured to generate an alternating magnetic field (20);
a capture coil (22) magnetically coupled to said source coil (18), thereby inducing the capture coil (22) to capture electrical power from the alternating magnetic field (20);
a plurality of magnetic sensors (50) disposed at distinct locations relative to the source coil (18), each magnetic sensor (50) configured to determine a sensor strength value of the alternating magnetic field (20) at its own distinct location;
object detection circuitry (48) configured to detect an object (52) at an object location relative to the source coil (18); and
controller circuitry (30) communicatively coupled with the power supply (16), the object detection circuitry (48), and the plurality of magnetic sensors (50), said controller circuitry (30) configured to determine an object strength value of the alternating magnetic field (20) at the object location based on the sensor strength values of the plurality of magnetic sensors (50) and further configured to interrupt the electrical power sourced by the power supply (16) when the object detection circuitry (48) detects the object (52) at the object location and the object strength value exceeds a threshold value.

2. The electrical charging system (10) according to claim 1, wherein the object detection circuitry (48) is configured to determine whether the object (52) is an animate object or an inanimate object and wherein the controller circuitry (30) is configured to interrupt the electrical power sourced by the power supply (16) only when the object detection circuitry (48) determines that the animate object is at the object location and the object strength value exceeds the threshold value.

3. The electrical charging system (10) according to any preceding claim, further comprising:
a capture current sensor (44) electrically coupled to the capture coil (22) and configured to determine a capture current value of the electrical power captured by the capture coil (22);
a capture voltage sensor (46) electrically coupled to the capture coil (22) configured to determine a capture voltage value of the electrical power captured by the capture coil (22);
a first transceiver (40) communicatively coupled with the capture current sensor (44) and the capture voltage sensor (46);
a second transceiver (42) communicatively coupled with the controller circuitry (30) and in wireless communication with the first transceiver (40);
a source current sensor (34) electrically coupled to the power supply (16) and communicatively coupled with the controller circuitry (30) and configured to determine a source current value of the electrical power sourced by the power supply (16); and
a source voltage sensor (32) electrically coupled to the power supply (16) and communicatively coupled with the controller circuitry (30) and configured to determine a source voltage value of the electrical power sourced by the power supply (16), wherein the controller circuitry (30) is configured to determine a coupling factor based on the capture current value, the capture voltage value, the source current value, and the source voltage value and is further configured to determine the object strength value of the alternating magnetic field (20) at the object location based on the sensor strength values of the plurality of magnetic sensors (50) and the coupling factor.

4. The electrical charging system (10) according to any of claims 1-2, further comprising:
a variable resistor (38) switchably coupled to the capture coil (22) configured to provide a variable resistive load to the capture coil (22);
a first transceiver (40) communicatively coupled with the variable resistor (38);
a second transceiver (42) communicatively coupled with the controller circuitry (30) and in wireless communication with the first transceiver (40);
a current sensor (34) electrically coupled to the power supply (16) and communicatively coupled with the controller circuitry (30) and configured to determine a current value of the electrical power sourced by the power supply (16); and
a voltage sensor (32) electrically coupled to the power supply (16) and communicatively coupled with the controller circuitry (30) and configured to determine an voltage value of the electrical power sourced by the power supply (16),
wherein the power supply (16) is configured to vary a frequency of the alternating current, wherein the controller circuitry (30) is communicatively coupled with the power supply (16) and configured to command the power supply (16) to vary the frequency of the electrical power and command the variable resistor (38) to vary a resistance of the variable resistor (38) via the first and second transceivers (40, 42), wherein the controller circuitry (30) is configured to determine an impedance value and a voltage-current phase value based on the current value and the voltage value and is further configured to determine the object strength value of the alternating magnetic field (20) at the object location based on the sensor strength values of the plurality of magnetic sensors (50), the impedance value, and the voltage-current phase value.

5. The electrical charging system (10) according to any preceding claim, wherein the power supply (16) is configured to supply the electrical power at a first power value or at a second power value that is higher than the first power value and wherein the controller circuitry (30) is configured to command the power supply (16) to supply the electrical power at the first power value or at the second power value.

6. The electrical charging system (10) according to claim 4 in combination with claim 5, wherein the controller circuitry (30) commands the variable resistor (38) to vary the resistance of the variable resistor (38) and commands the power supply (16) to vary the frequency of the electrical power when the power supply (16) is supplying the electrical power at the first power value.

7. The electrical charging system (10) according to any of claims 4 or 6, wherein the variable resistor (38) is changeable between a first resistance value and a second resistance value greater than the first resistance value.

8. A method (100) of operating an electrical charging system (10) configured to wirelessly charge an energy storage device (12) having a power supply (16) configured to source electrical power having an alternating current, a source coil (18) electrically coupled with the power supply (16) and configured to generate an alternating magnetic field (20), a capture coil (22) magnetically coupled to said source coil (18), thereby inducing the capture coil (22) to capture electrical power from the alternating magnetic field (20), a plurality of magnetic sensors (50) disposed at distinct locations relative to the source coil (18), object detection circuitry (48), and controller circuitry (30) is communicatively coupled with the power supply (16), the object detection circuitry (48), and plurality of magnetic sensors (50), said method (100) comprising the steps of:
determining (110) a sensor strength value of the alternating magnetic field (20) at the distinct location of each magnetic sensor (50) of the plurality of magnetic sensors (50);
detecting (112) an object (52) at an object location relative to the source coil (18) using the object detection circuitry (48);
determining (114) an object strength value of the alternating magnetic field (20) at the object location based on the sensor strength value of the alternating magnetic field (20) at the distinct location of each magnetic sensor (50) of the plurality of magnetic sensors (50) using the controller circuitry (30);
determining whether the object strength value exceeds a threshold value using the controller circuitry (30);
interrupting (114) the electrical power sourced by the power supply (16) when the controller circuitry (30) determines that the object strength value exceeds a threshold value.

9. The method (100) according to claim 8, further comprising the steps of:
determining whether the object (52) is an animate object or an inanimate object using the object detection circuitry (48);
interrupting the electrical power sourced by the power supply (16) only when the object detection circuitry (48) determines that an animate object is at the object location and the controller circuitry (30) determines that the object strength value exceeds the threshold value.

10. The method (100) according to any of claims 8-9, wherein the electrical charging system (10) further comprises a capture current sensor (44) electrically coupled to the capture coil (22), a capture voltage sensor (46) electrically coupled to the capture coil (22), a first transceiver (40) communicatively coupled with the capture current sensor (44) and the capture voltage sensor (46), a second transceiver (42) communicatively coupled with the controller circuitry (30) and in wireless communication with the first transceiver (40), a source current sensor (34) electrically coupled to the power supply (16) and communicatively coupled with the controller circuitry (30), and a source voltage sensor (32) electrically coupled to the power supply (16) and communicatively coupled with the controller circuitry (30) and wherein the method (100) further comprises the steps of:
determining a capture current value of the electrical power captured by the capture coil (22) using the capture current sensor (44);
determining a capture voltage value of the electrical power captured by the capture coil (22) using the capture voltage sensor (46);
determining a source current value of the electrical power sourced by the power supply (16) using the source current sensor (34);
determining a source voltage value of the electrical power sourced by the power supply (16) using the source voltage sensor (32);
determining a coupling factor using the controller circuitry (30) based on the capture current value, the capture voltage value, the source current value, and the source voltage value;
determine the object strength value of the alternating magnetic field (20) at the object location using the controller circuitry (30) based on the sensor strength value of the alternating magnetic field (20) at the distinct location of each magnetic sensor (50) of the plurality of magnetic sensors (50) and the coupling factor.

11. The method (100) according to any of claims 8-9, wherein the electrical charging system (10) further comprises a variable resistor (38) switchably coupled to the capture coil (22) configured to provide a variable resistive load to the capture coil (22), a first transceiver (40) communicatively coupled with the variable resistor (38), a second transceiver (42) communicatively coupled with the controller circuitry (30) and in wireless communication with the first transceiver (40), a current sensor (34) electrically coupled to the power supply (16) and communicatively coupled with the controller circuitry (30), and a voltage sensor (32) electrically coupled to the power supply (16) and communicatively coupled with the controller circuitry (30), wherein the power supply (16) is configured to vary a frequency of the alternating current, wherein the controller circuitry (30) is communicatively coupled with the power supply (16), and wherein the method (100) further comprises the steps of:
determining a current value of the electrical power sourced by the power supply (16) using the current sensor (34);
determining a voltage value of the electrical power sourced by the power supply (16) using the voltage sensor (32);
varying the frequency of the electrical power using a command from the controller circuitry (30) to the power supply (16);
varying a resistance of the variable resistor (38) using a command from the controller circuitry (30) to the variable resistor (38) via the first and second transceivers (40, 42);
determining an impedance value and a voltage-current phase value based on the current value and the voltage value using the controller circuitry (30);
determining the object strength value of the alternating magnetic field (20) at the object location based on the sensor strength value of the alternating magnetic field (20) at the distinct location of each magnetic sensor (50) of the plurality of magnetic sensors (50), the impedance value, and the voltage-current phase value using the controller circuitry (30).

12. The method (100) according to any of claims 8-11, wherein the power supply (16) is configured to supply the electrical power at a first power value or at a second power value that is higher than the first power value and wherein the controller circuitry (30) is configured to command the power supply (16) to supply the electrical power at the first power value or at the second power value.

13. The method (100) according to claims 11 and 12, wherein the step of varying the frequency of the electrical power using a command from the controller circuitry (30) to the power supply (16) is performed concurrently with the step of varying a resistance of the variable resistor (38) using a command from the controller circuitry (30) to the variable resistor (38) via the first and second transceivers (40, 42) when the power supply (16) is supplying the electrical power at the first power value and wherein the variable resistor (38) is changeable between a first resistance value and a second resistance value greater than the first resistance value.
